# EUROPÄISCHE PATENTSCHRIFT

(11) **EP 0 933 522 B1**
(45) Veröffentlichungstag und Bekanntmachung des Hinweises auf die Patenterteilung: **12.05.2004**
(21) Anmeldenummer: 98123797.7
(22) Anmeldetag: 15.12.1998
(51) Int. Cl.: F02D 41/14

(54) **Verfahren zur Einstellung der Ausgangsleistung einer Brennkraftmaschine**
Method for adjusting the output power of an internal-combustion engine
Méthode pour ajuster la puissance de sortie d'un moteur à combustion interne

(30) Priorität: 29.01.1998 DE 19803387
(43) Veröffentlichungstag der Anmeldung: 04.08.1999
(73) Patentinhaber: DaimlerChrysler AG, 70567 Stuttgart (DE)
(72) Erfinder: Braun, Hans, 70378 Stuttgart (DE); Brock, Thomas, 85521 Ottobrunn (DE); Danner, Bernd, 72631 Aichtal (DE); Hinrichs, Wolfgang, 70794 Filderstadt (DE); Klaiber, Thomas, 71384 Weinstadt (DE); Kröger, Torsten, 70374 Stuttgart (DE); Lehner, Alf, 73760 Ostfildern (DE)

(56) Entgegenhaltungen:
- DE-A- 19 611 839
- DE-A- 19 618 893
- MEISBERGER D ET AL: "DIE NEUE MOTORSTEUERUNG ME 7.2 VON BOSCH FUER DE BMW V8-MOTOR" MTZ MOTORTECHNISCHE ZEITSCHRIFT,DE,FRANCKH'SCHE VERLAGSHANDLUNG,ABTEILUNG TECHNIK. STUTTGART, Bd. 59, Nr. 12, Dezember 1998 (1998-12), Seiten 826-834, XP000799091 ISSN: 0024-8525
- MOSER W ET AL: "BENZIN-DIREKTEINSPRITZUNG - EINE NEUE HERAUSFORDERING FUER ZUKUENFTIGE MOTORSTEUERUNGSSYSTEME. TEIL 1: EINSPRITZSYSTEM UND MOTORSTEUERUNG" MTZ MOTORTECHNISCHE ZEITSCHRIFT,DE,FRANCKH'SCHE VERLAGSHANDLUNG,ABTEILUNG TECHNIK. STUTTGART, Bd. 58, Nr. 9, 1. September 1997 (1997-09-01), Seiten 458-464, XP000697969 ISSN: 0024-8525

## Beschreibung

Die Erfindung betrifft Verfahren zur Einstellung der Ausgangsleistung einer Brennkraftmaschine in einem Kraftfahrzeug gemäß dem Oberbegriff des Patentanspruchs 1.

Aus der MTZ Motortechnische Zeitschrift 56 (1995) 11, Seite 666 ff. ist eine Motorsteuerung, die sogenannte ME 1.0 der Anmelderin, bekannt. Hierbei werden die Momentenvorgaben vieler Teilsysteme der Brennkraftmaschine über einen sogenannten CAN-Bus an die Motronic übergeben und dort eine resultierende Momentenvorgabe ermittelt. Über einen zweiten Teil der Motronic, der sogenannten Momenteneinstellung, werden dann verschiedene Betriebsparameter der Brennkraftmaschine zur Einstellung der resultierenden Momentenvorgabe gesteuert oder geregelt.

Aus der gattungsgemäßen DE 196 11 839 A1 ist ein Verfahren und eine Vorrichtung zur Steuerung des von einer Antriebseinheit abgegebenen Drehmoments bekannt, bei welchem bei einer Getriebeschaltung ein Sollmomentenwert abhängig von einem vom Fahrer vorgegebenen Sollmomentenwert bestimmt wird. Ferner wird zum Getriebeschutz ein Begrenzungsmomentenwert vorgegebenen, der zur Begrenzung des von der Antriebseinheit abgegebenen Drehmoments dient.

Es ist die Aufgabe der Erfindung ein Verfahren zur Einstellung der Ausgangsleistung einer Brennkraftmaschine so zu verbessern, daß Änderungen an bestehenden Verfahren oder die Aufnahme neuer Funktionalitäten ohne größeren Aufwand durchgeführt werden kann.

Die Aufgabe wird durch den kennzeichnenden Teil des Patentanspruchs 1 gelöst.

Das beschriebene System weist gegenüber herkömmlichen Momentenschnittstellen den Vorteil auf, daß allen Funktionalitäten eine gemeinsame physikalische Größe, vorzugsweise das Kurbelwellenmoment, zugrundeliegt. Außerdem haben die bisherigen Systeme direkt auf die unterschiedlichen Aktoren zugegriffen, während in dem neuen System alle Momentenvorgaben zuerst koordiniert und erst anschließend über eine gemeinsame Motorsteuerung/-Regelung eingestellt werden. Dadurch werden sowohl Änderungen an den bestehenden Systemen als auch die Aufnahme neuer Systeme erheblich vereinfacht. Von Vorteil ist auch, daß die Art der Motorsteuerung und der Brennkraftmaschine unerheblich ist.

Weitere Vorteile gehen aus den Unteransprüchen und der Beschreibung hervor. Die Erfindung ist im folgenden anhand einer Zeichnung näher erläutert, wobei
- Fig. 1: eine Prinzipdarstellung einer Momentenschnittstelle und
- Fig. 2: die prinzipielle Funktionsweise des erfindungsgemäßen Verfahrens zur Momentenkoordination zeigt.

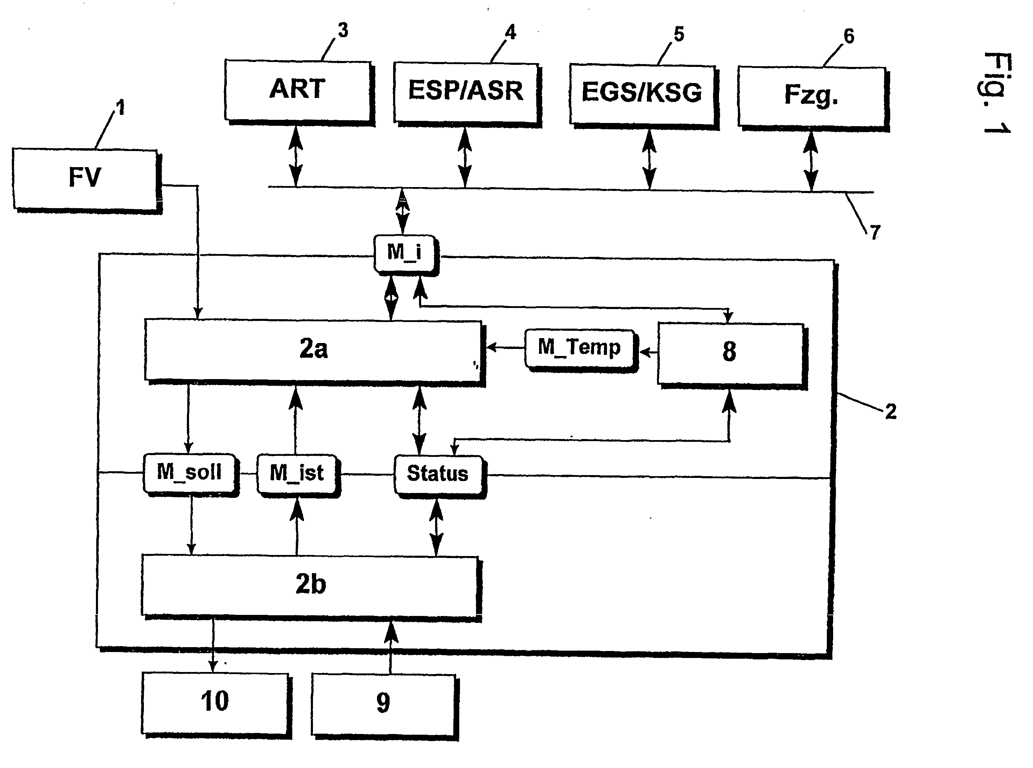

Fig. 1 zeigt eine Übersicht der Steuergeräte und Funktionen, die am Antriebsstrang eines Kraftfahrzeuges zusammenwirken. Der Fahrer signalisiert seinen Fahrerwunsch über das Fahrpedal FV und eine dazugehörige Auswertelogik 1 in Form eines Fahrerwunschmomentes M_FV an das insgesamt mit 2 bezeichnete Motorsteuergerät. Weitere Wunschmomente M_i werden von verschiedenen Teilsystemen 3-6 über eine normierte Schnittstelle, dem sogenannten CAN-Bus 7, an das Motorsteuergerät 2 kommuniziert. Bei den verschiedenen Teilsystemen handelt es sich beispielsweise um einen Abstandsregeltempomaten 3, Fahrdynamikregelsysteme 4 oder Getriebesteuerungen 5. Vom Motorsteuergerät 2 werden auch Informationen mit weiteren Fahrzeugsystemen 6 über den CAN-Bus 7 ausgetauscht. Als Schnittstellt muß aber nicht unbedingt der CAN-Bus 7 verwendet werden. Beispielsweise kann die Getriebesteuerung 5 auch in das Motorsteuergerät 2 integriert werden. Die ausgetauschten Wunschmomente M_i basieren auf einem physikalischen Wert, vorzugsweise dem Kurbelwellenmoment. Das Motorsteuergerät 2 ist unterteilt in die Funktionsblöcke Momentenkoordination 2a und Motorsteuerung/Regelung 2b, wobei zumindest die Momentenkoordination 2a zwingendermaßen in der Motorsteuerung 2 angesiedelt sein muß. Die Momentenkoordination 2a verarbeitet und priorisiert das Fahrerwunschmoment M_FV, die externen Wunschmomente M_i, sowie die Anforderungen M_Temp eines internen Tempomaten 8, der funktionell der Momentenkoordination 2a zugeordnet ist. Der Tempomat 8 könnte jedoch auch in einem separaten Gerät ausgelagert sein. Das aus der Momentenkoordination 2a resultierende Sollmoment M_soll wird an die Motorsteuerung/Regelung 2b übergeben, die wiederum das aktuelle Istmoment M_ist und ihren Status an die Momentenkoordination 2a zurückmeldet. Die Motorsteuerung/Regelung 2b setzt unter Berücksichtigung des über Sensoren 9 gemeldeten Motorbetriebszustandes das Sollmoment M_soll in Steuersignale für Aktoren 10 um. Beim Ottomotor kommen als Steuersignale beispielsweise die Drosselklappenstellung, die Einspritzmenge und der Zündwinkel in Frage.

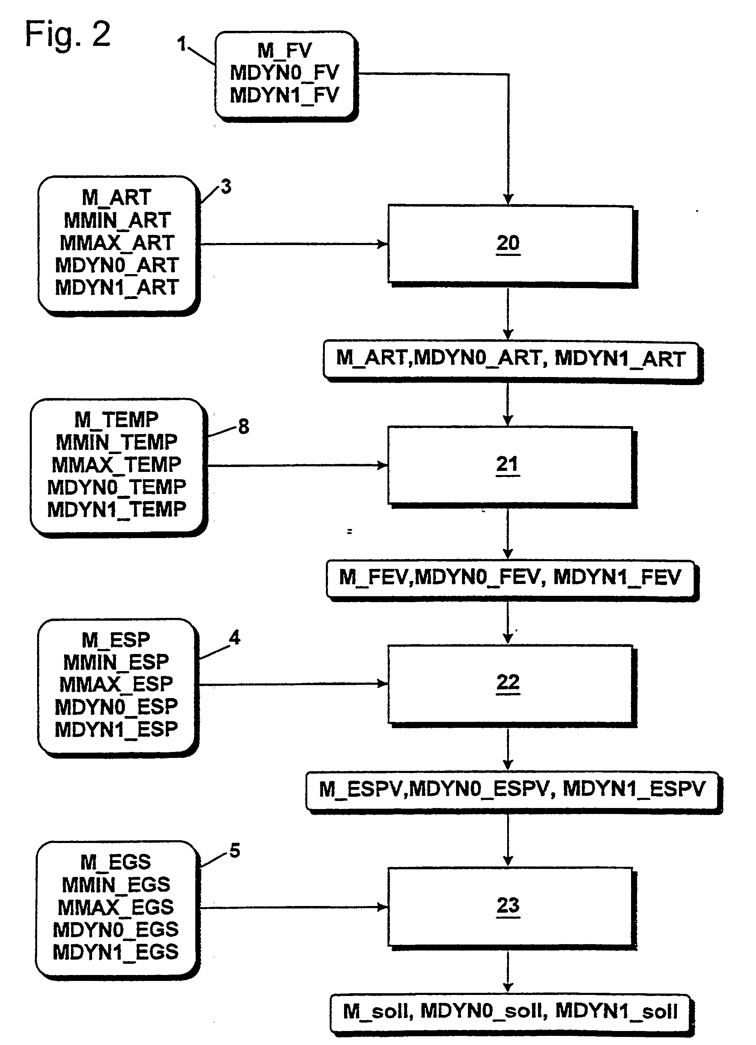

Die prinzipielle Wirkungsweise der Momentenkoordination 2a zeigt Fig. 2. In einer Auswertelogik 1 wird aus der Fahrpedalstellung und der aktuellen Motordrehzahl das aktuelle Fahrerwunschmoment M_FV ermittelt und an die Momentenkoordination 2a übergeben. Zusätzlich wird von der Auswertelogik 1 eine Information darüber, mit welcher Dynamik die Momenteneinstellung erfolgen soll, in Form von zwei sogenannten Dynamikbits MDYN0_FV, MDYN1_FV bereitgestellt. Entsprechend wird von jedem der Teilsysteme 3-6, 8 ebenfalls ein Wunschmoment M_i und zwei Dynamikbits MDYN0_i, MDYN1_i bereitgestellt und an die Momentenkoordination 2a übergeben. Von den Teilsystemen 3-6, 8 wird außerdem eine Information darüber, ob es sich bei dem Wunschmoment M_i um ein momenterhöhendes beziehungsweise momentreduzierendes Wunschmoment handelt, in Form zweier weiterer Bits MMIN_i, MMAX_i an die Momentenkoordination 2a übergeben.

In der Momentenkoordination 2a ist nun für jedes Teilsystem 3-6, 8 ein Koordinationsblock 20-23 vorhanden, in dem anhand der Bits MMIN_i, MMAX_i aus dem Fahrerwunschmoment M_FV beziehungsweise dem resultierenden Sollmoment des vorherigen Teilsystems und den Dynamikbits MDYN0_FV, MDYN1_FV beziehungsweise den resultierenden Dynamikbits MDYN0_i, MDYN1_i des vorherigen Teilsystems das resultierende Sollmoment beziehungsweise die resultierenden Dynamikbits ermittelt werden. Die genaue Funktion der Koordinationsblöcke 20-23 wird weiter unten näher erläutert. Insgesamt erfolgt die Priorisierung der Wunschmomente M_i und der Dynamikbits MDYN0_i, MDYN1_i durch die Reihenfolge der Signalverarbeitung. Der Fahrerwunsch M_FV hat die niedrigste Priorität, die Getriebeanforderung M_EGS hat die höchste Priorität.

Im folgenden wird die Funktion der Dynamikbits MDYN0_i, MDYN1_i am Beispiel eines Ottomotors kurz beschrieben. Bei Ottomotoren lassen sich Momentenanforderungen auf unterschiedliche Weisen vorzugsweise über den Luftpfad und über einen Zündungseingriff realisieren. Theoretisch wäre auch eine Kraftstoffabschaltung möglich. Die jeweils gewünschte Art der Momenteneinstellung wird über die zwei Dynamikbits MDYN0_i, MDYN1_i definiert:

| Momenteneinstellung | MDYN1_i | MDYN0_i |
|---|---|---|
| Wirkungsgrad optimale Momenteneinstellung über den Luftpfad | 0 | 0 |
| Schnellst mögliche Momenteneinstellung über Zündwinkelverstellung und Luftpfad | 0 | 1 |
| Momentensollwert für den Luftpfad wird eingefroren, Momentenreduktion erfolgt über Zündwinkelverstellung | 1 | 0 |
| Ungültige Kombination | 1 | 1 |

Soll beispielsweise das Fahrerwunschmoment durch eine Wirkungsgrad optimale Momenteneinstellung erfolgen, so werden von der Auswertelogik 1 folgende Dynamikbits an den Koordinationsblock 20 übergeben:
MDYN0_FV := 0 MDYN1_FV := 0

Im Normalbetrieb des Abstandsregeltempomaten 3 und des internen Tempomaten 8 ist ebenfalls eine Wirkungsgrad optimale Momenteneinstellung vorgegeben:
MDYN0_ART := 0 MDYN1_ART := 0
MDYN0_TEMP := 0 MDYN1_TEMP := 0

In bestimmten Betriebsbedingungen kann jedoch für den Abstandsregeltempomaten 3 auf eine schnellst mögliche Sollmomenteneinstellung umgestellt werden:
MDYN0_ART := 1 MDYN1_ART := 0

Bei den Fahrdynamikregelsystemen 4 wird im Normalbetrieb eine schnellst mögliche Sollmomenteneinstellung vorgegeben:
MDYN0_ESP := 1 MDYN1_ESP := 0

In bestimmten Betriebsbedingungen kann jedoch auf eine Momenteneinstellung mit Vorhalt umgestellt werden:
MDYN0_ESP := 0 MDYN1_ESP := 1

Die Getriebesteuerungen 5 wünscht bei Schaltvorgängen eine schnellst mögliche Momenteneinstellung:
MDYN0_EGS := 1 MDYN1_EGS := 0

Bei bestimmten Betriebsbedingungen, wie z.B. bei Momentenbegrenzung bei Anfahrvorgängen, wird eine Wirkungsgrad optimale Momenteneinstellung vorgegeben:
MDYN0_EGS := 0 MDYN1_EGS := 0

Selbstverständlich zeigen die genannten Vorgaben nur Ausführungsbeispiele. Es können auch andere Vorgaben gemacht werden oder gegebenenfalls andere Momenteneinstellungsoptionen über die Dynamikbits MDYN0_i, MDYN1_i definiert werden. Außerdem soll der Schutzbereich nicht auf die im Ausführungsbeispiel gezeigte Reihenfolge der Teilsysteme 3-6, 8 beschränkt sein. Die genaue Funktion der Koordinationsblöcke 20-23 mit seinen Ein- und Ausgangssignalen zeigt in allgemein gültiger Form die folgende Tabelle:

| Resultierende Werte | Zuweisung | | Bedingung |
|---|---|---|---|
| M_AUS MDYN0_AUS MDYN1_AUS | | M_EIN1 | MMIN_EIN2 = 0 und |
| | := | MDYN0_EIN1 | MMAX_EIN2 = 0 |
| | | MDYN1_EIN1 | |
| | | M_EIN1 | MMIN_EIN2 = 1 und |
| | := | MDYN0_EIN1 | MMAX_EIN2 = 0 und |
| | | MDYN1_EIN1 | M_EIN2 > M_EIN1 |
| | | M_EIN2 | MMIN_EIN2 = 1 und |
| | := | MDYN0_EIN2 | MMAX_EIN2 = 0 und |
| | | MDYN1_EIN2 | M_EIN2 ≤ M_EIN1 |
| | | M_EIN1 | MMIN_EIN2 = 0 und |
| | := | MDYN0_EIN1 | MMAX_EIN2 = 1 und |
| | | MDYN1_EIN1 | M_EIN2 < M_EIN1 |
| | | M_EIN2 | MMIN_EIN2 = 0 und |
| | := | MDYN0_EIN2 | MMAX_EIN2 = 1 und |
| | | MDYN1_EIN2 | M_EIN2 ≥ M_EIN1 |
| | | M_EIN2 | MMIN_EIN2 = 1 und |
| | := | MDYN0_EIN2 | MMAX_EIN2 = 1 und |
| | | MDYN1_EIN2 | |

Am Eingang 1, kurz mit EIN1 bezeichnet, liegen jeweils die Signale der Auswertelogik 1 beziehungsweise die Ausgangssignale, kurz mit AUS bezeichnet, des jeweils vorherigen Koordinationsblockes 20-22. Am Eingang 2, kurz mit EIN2 bezeichnet, liegen jeweils die Signale der zu koordinierenden Funktion, also der Teilsysteme 3-6, 8, an. Ausgegeben wird jeweils das resultierende Sollmoment M_AUS und die resultierenden Dynamikbits MDYN0_AUS, MDYN1_AUS. Die Ausgangswerte des letzten Koordinationsblockes 23 werden dann als resultierendes Sollmoment M_soll beziehungsweise als resultierende Dynamikbits MDYN0_soll, MDYN1_soll an die Motorsteuerung/-Regelung 2b übergeben.

Die Funktion der Momentenkoordination 2a soll im folgenden nochmals exemplarisch am Beispiel des Koordinationsblockes 23 erläutert werden. Am Eingang1 liegen die resultierenden Werte des vorherigen Koordinationsblockes 22, also M_ESPV, MDYN0_ESPV und MDYN1_ESPV, an. Am Eingang 2 liegen die Werte der Getriebesteuerung 5, also M_EGS, MMIN_EGS, MMAX_EGS, MDYN0_EGS und MDYN1_EGS an. Aus den Signalen der beiden Eingänge werden nun ein resultierendes Sollmoment M_soll und resultierende Dynamikbits MDYN0_soll und MDYN1_soll ermittelt und an die Motorsteuerung/Regelung 2b übergeben.

Angenommen, die Getriebesteuerung 5 wünscht unter den aktuellen Betriebsbedingungen einer Verringerung des Ausgangsmomentes auf einen vorgegebenen Wunschmoment M_EGS. In diesem Fall würden von der Getriebesteuerung 5 folgende Werte an den Koordinationsblock 23 übergeben:
M_EIN2 := M_EGS
MMIN_EGS := 1
MMAX_EGS := 0
MDYN0_EIN2 := MDYN0_EGS
MDYN1_EIN2 := MDYN1_EGS

Weiterhin werden vom vorherigen Koordinationsblock 22 folgende Werte am Eingang1 zur Verfügung gestellt:
M_EIN1 := M_ESPV
MDYN0_EIN1 := MDYN0_ESPV
MDYN1_EIN1 := MDYN1_ESPV

Unter diesen Vorgaben gibt es für die Ermittlung der Ausgabewerte zwei Möglichkeiten. Im ersten Fall ist das Wunschmoment M_EGS größer als das aus dem Koordinationsblock 22 resultierende Sollmoment M_ESPV, also M_EIN2 > M_EIN1. Somit sind die Bedingungen, die in der zweiten Zeile der obigen Tabelle aufgelistet sind, erfüllt. Aus diesem Grund werden als Ausgabewerte die Werte vom Eingang1 weitergegeben:
M_soll := M_AUS := M_EIN1 := M_ESPV
MDYN0_soll := MDYN0_AUS := MDYN0_EIN1 := MDYN0_ESPV
MDYN1_soll := MDYN1_AUS := MDYN1_EIN1 := MDYN1_ESPV

Im zweiten Fall ist das Wunschmoment M_EGS kleiner als das aus dem Koordinationsblock 22 resultierende Sollmoment M_ESPV, also M_EIN2 ≤ M_EIN1. Somit sind die Bedingungen, die in der dritten Zeile der obigen Tabelle aufgelistet sind, erfüllt. Aus diesem Grund werden als Ausgabewerte die Werte vom Eingang2 weitergegeben:
M_soll := M_AUS := M_EIN2 := M_EGS
MDYN0_soll := MDYN0_AUS := MDYN0_EIN2 := MDYN0_EGS
MDYN1_soll := MDYN1_AUS := MDYN1_EIN2 := MDYN1_EGS

Entsprechend können die Ausgabewerte für alle Betriebsbedingungen und für alle Koordinationsblöcke 20-23 aus obiger Tabelle abgeleitet werden. An dem gezeigten Beispiel wird auch die Priorisierung der einzelnen Teilsysteme durch die Reihenfolge der Verarbeitung deutlich. Unter der Vorgabe der Getriebesteuerung 5 hinsichtlich einer Drehmomentverringerung wird als resultierendes Sollmoment M_soll entweder das Wunschmoment M_EGS der Getriebesteuerung 5 selbst oder aber ein aus der bisgerigen Koordinierung ermitteltes resultierendes Sollmoment M_ESPV als Ausgabewert generiert, jedoch nur, falls das resultierende Sollmoment M_ESPV das Wunschmoment M_EGS noch unterschreitet.

Das beschriebene System weist gegenüber herkömmlichen Momentenschnittstellen den Vorteil auf, daß allen Funktionalitäten eine gemeinsame physikalische Größe, vorzugsweise das Kurbelwellenmoment, zugrundeliegt. Außerdem haben die bisherigen Systeme direkt auf die unterschiedlichen Aktoren zugegriffen, während in dem neuen System alle Momentenvorgaben zuerst koordiniert und erst anschließend über eine gemeinsame Motorsteuerung/-Regelung eingestellt werden. Dadurch werden sowohl Änderungen an den bestehenden Systemen als auch die Aufnahme neuer Systeme erheblich vereinfacht.

## Patentansprüche

1. Verfahren zur Einstellung der Ausgangsleistung einer Brennkraftmaschine in einem Kraftfahrzeug, wobei
aus einem Fahrerwunsch ein Fahrerwunschmoment ermittelt wird, von mindestens zwei das Ausgangsmoment beeinflussenden Teilsystemen der Motorsteuerung jeweils ein Wunschmoment vorgegeben wird,
die das Ausgangsmoment beeinflussenden Teilsysteme priorisiert werden,
aus dem Fahrerwunschmoment und den mindestens zwei Wunschmomenten ein resultierendes Sollmoment ermittelt und
mit Hilfe einer Vorrichtung zur Momenteneinstellung das resultierende Sollmoment eingestellt wird
**dadurch gekennzeichnet,**
**dass** von jedem Teilsystem (3-6, 8) neben dem Wunschmoment (M_i) eine Information (MMIN_i, MMAX_i) darüber zur Verfügung gestellt werden, ob es sich bei dem Wunschmoment (M_i) um ein momenterhöhendes oder ein momentverringerndes Wunschmoment (M_i) handelt,
**dass** für jedes Teilsystem (3-6, 8) ein Koordinationsblock (20-23) vorgesehen ist, in dem das jeweilige Wunschmoment (M_i) mit dem Fahrerwunschmoment (M_FV) beziehungsweise dem resultierenden Sollmoment (M_AUS) des vorherigen Teilsystems (3-6, 8) verglichen wird, wobei dann, wenn es sich um ein momenterhöhendes beziehungsweise momentreduzierendes Wunschmoment (M_i) handelt, der höhere beziehungsweise niedrigere der beiden Momente (M_EIN1, M_EIN2) als resultierendes Sollmoment (M_soll, M_AUS) an das nächste Teilsystem (3-6, 8) beziehungsweise an die Vorrichtung zur Momenteneinstellung (2b) weitergegeben wird, und
**dass** die Koordinationsblöcke (20-23) in der Reihenfolge der Priorisierung der zugehörigen Teilsystem (3-6, 8) durchlaufen werden, wobei als erstes der Koordinationsblock (20) des Teilsystems (3) mit der niedrigsten und als letztes der Koordinationsblock (5) des Teilsystems (23) mit der höchsten Priorität durchlaufen wird.

2. Verfahren nach Anspruch 1,
**dadurch gekennzeichnet,**
**daß** die Teilsysteme Abstandsregeltempomat (3) , Tempomat (8), Fahrdynamikregelung (4) und Getriebesteuerung (5) in der genannten Reihenfolge vorgesehen sind.

3. Verfahren nach Anspruch 1,
**dadurch gekennzeichnet,**
**daß** zusätzlich von jedem Teilsystem (3-6, 8) eine Information (MDYN0_i, MDYN1_i) bereitgestellt wird, mit welcher Dynamik die Momenteneinstellung erfolgen soll, und daß die Momenteneinstellung in Abhängigkeit von dieser Information (MDYN0_i, MDYN1_i) über den Luftpfad und/oder den Zündwinkel und/oder eine Kraftstoffabschaltung eingestellt wird.

4. Verfahren nach Anspruch 3,
**dadurch gekennzeichnet,**
**daß** die Dynamikinformation durch jeweils zwei Dynamikbits (MDYN0_i, MDYN1_i) bereitgestellt wird, wobei in jedem Koordinationsblock (20-23) aus den Dynamikbits (MDYN0_EIN2, MDYN1_EIN2) des aktuellen Teilsystems (3-6, 8) und den jeweils resultierenden Dynamikbits (MDYN0_EIN1, MDYN1_EIN1) des vorherigen Koordinationsblockes (20-23) neue resultierende Dynamikbits (MDYN0_AUS, MDYN1_AUS) ermittelt werden.

5. Verfahren nach Anspruch 4,
**dadurch gekennzeichnet,**
**daß** dann, wenn es sich im jeweiligen Teilsystem (3-6, 9) um ein momenterhöhendes beziehungsweise momentreduzierendes Wunschmoment (M_i) handelt, die resultierenden Dynamikbits (MDYN0_EIN1, MDYN1_EIN1) des vorherigen Teilsystems (3-6, 8), falls das resultierende Wunschmoment (M_EIN1) des vorherigen Teilsystems (3-6, 8) größer als das Wunschmoment (M_EIN2) des aktuellen Teilsystems (3-6, 8) ist, beziehungsweise die Dynamikbits (MDYN0_EIN2, MDYN1_EIN2) des aktuellen Teilsystems (3-6, 8), falls das resultierende Wunschmoment (M_EIN1) des vorherigen Teilsystems (3-6, 8) kleiner als das Wunschmoment (M_EIN2) des aktuellen Teilsystems (3-6, 8) ist, als neue Dynamikbits (MDYN0_AUS, MDYN1_AUS) an das nächste Teilsystem (3-6, 8) beziehungsweise an die Vorrichtung zur Momenteneinstellung (2b) weitergegeben wird.

## Claims

1. Process for setting the output of an internal combustion engine in a vehicle, whereby
- a momentum desired by the driver is determined from a driver's wishes,
- a desired momentum is in each case specified by at least two part-systems, of the engine control, influencing the output momentum,
- the part-systems influencing the output momentum are prioritized,
- a resulting required momentum is determined from the driver's desired momentum and, with the aid of a device for setting the momentum, the resulting required momentum is set,
**characterized in that**
- a data item (MMIM_i, MMAX_i) is prepared, together with the desired momentum (M_i), by each part-system (3-6, 8) indicating whether the desired momentum (M_i) is a required momentum that increases the momentum or a desired momentum (M_i) which reduces the momentum,
- there is a co-ordination block, for each part-system (3-6, 8), in which the given desired momentum (M_i) is compared with the driver's desired momentum (M_FV) or the resulting required motion (M_AUS) of the previous part-system (3-6, 8), whereby, if there is a desired momentum (M_i) which reduces or increases the momentum, the higher or lower of the two momenta (M_EIN1, M_EIN2) is transmitted to the next part-system (3-6, 8) or to the device for setting the momentum (2b), and
- **in that** the co-ordination blocks (20-23) are passed through in the sequence of prioritization of the associated part-system (3-6, 8), whereby the co-ordination block (20) of the part system (3) with the lowest priority is run through first and the co-ordination block (5) of the part system (23) with the highest priority is run through last.

2. Process in accordance with claim 1,
**characterized in that**
the part-systems have a distance-regulation pace unit (3), a pace unit (8), a travelling dynamics regulator (4) and gearing control means (5), in a sequence of this order.

3. Process in accordance with claim 1,
**characterized in that**
a data element (MDYNO_i, MDYN1_i) is additionally prepared by each part-system, with the dynamic range of which the adjustment of momentum is to occur, and **in that** the momentum adjustment is set on the basis of this data element (MDYNO_i, MDYN1_i) by means of the air path and/or the ignition blocking period and/or fuel cutoff.

4. Process in accordance with claim 3,
**characterized in that**
the dynamics information is prepared by means, in each case, of two dynamics bits (MDYN0_i, MDYN1_i), whereby new resulting dynamics bits (MDYN0_AUS, MDYN1_AUS) are determined, in each co-ordination block (20-23), from the dynamics bits (MDYN0_EIN2, MDYN1_EIN2) of the current part system (3-6, 8) and the given resulting dynamics bits (MDYN0_EIN1, MDYN1_EIN1) of the previous co-ordination block (20-23).

5. Process in accordance with claim 4,
**characterized in that**
when there is a momentum-increasing or momentum-reducing required momentum (M_i) in the given part system (3-6, 9), the resulting dynamics bits (MDYN0_EIN1, MDYN1_EIN1) of the previous part-system (3-6, 8) are transmitted as new dynamics bits (MDYN0_AUS, MDYN1_AUS) to the next part-system (3-6, 8) or to the device for setting the momentum (2b) if the resulting desired momentum (M_EIN1) of the previous part-system (3-6, 8) is greater than the desired momentum (M_EIN2) of the current part-system (3-6, 8) or, if the resulting desired momentum (M_EIN1) of the previous part-system (3-6, 8) is smaller than the desired momentum (M_EIN2) of the current part-system, the dynamics bits (MDYN0_EIN2, MDYN1_EIN2) of the current part-system (3-6, 8) are transmitted as new dynamics bits (MDYN0_AUS, MDYN1_AUS) to the next part-system (3-6, 8) or to the device for setting the momentum (2b).

## Revendications

1. Procédé pour ajuster la puissance de sortie d'un moteur à combustion interne dans un véhicule, dans lequel
d'après un souhait du conducteur, un moment de souhait du conducteur est recherché,
un moment de souhait est prédéterminé par au moins deux sous-systèmes de la distribution influençant respectivement le moment de sortie,
les sous-systèmes influençant le moment de sortie sont prioritaires,
d'après le moment de souhait du conducteur et au moins deux moments de souhait, un moment prescrit résultant est recherché et à l'aide d'un procédé en vue de l'ajustement des moments, le moment prescrit résultant est ajusté,
**caractérisé en ce que**
est en outre mise à disposition par chaque sous-système (3-6, 8) en plus d'un moment de souhait (M_i), une information (MMIN_i, MMAX_i), s'il s'agit, dans le cas du moment de souhait (M_i), d'un moment de souhait (M_i) augmentant le moment ou ralentissant le moment,
pour chaque sous-système (3-6, 8), un bloc de coordination (20-23) est prévu, dans lequel le moment de souhait respectif (M_i) est comparé avec le moment de souhait du conducteur (M_FV) ou le moment prescrit résultant (M_AUS) du sous-système précédent (3-6, 8), dans lequel alors, s'il s'agit d'un moment de souhait (M_i) augmentant le moment ou réduisant le moment, le plus élevé ou le plus faible des deux moments (M_EIN1, M_EIN2) est transmis en tant que moment prescrit résultant (M_soll, M_AUS) au sous-système suivant (3-6, 8) ou au dispositif d'ajustement de moment (2b), et
les blocs de coordination (20-23) sont parcourus dans l'ordre de priorité du sous-système associé (3-6, 8), dans lesquels le bloc de coordination (20) du sous-système (3) avec la priorité la plus faible est parcouru en premier et le bloc de coordination (5) du sous-système (23) avec la priorité la plus élevée est parcouru en dernier.

2. Procédé selon la revendication 1, **caractérisé en ce que** les sous-systèmes, transistor d'allure de régulation de distance (3), transistor d'allure (8), régulation de la dynamique du mouvement des véhicules (4) et commande de la boîte de vitesse (5), sont prévus dans l'ordre connu.

3. Procédé selon la revendication 1, **caractérisé en ce que**, en plus de chaque sous-système (3-6, 8), une information (MDYN0_i, MDYN1_i) est mise à disposition, avec quelle dynamique l'ajustement des moments doit se produire, et l'ajustement des moments est ajusté selon cette information (MDYN0_i, MDYN1_i) en passant par l'amenée d'air et/ou l'angle de came et/ou une coupure de carburant.

4. Procédé selon la revendication 3, **caractérisé en ce que** l'information concernant la dynamique est mise à disposition par l'intermédiaire respectivement de deux bits de dynamique (MDYN0_i, MDYN1_i), dans laquelle, dans chaque bloc de coordination (20-23), de nouveaux bits de dynamique résultants (MDYN0_AUS, MDYN1_AUS) sont recherchés à partir des bits de dynamique (MDYN0_EIN2, MDYN1_EIN2) du sous-systèmes actuel (3-6, 8) et à partir des bits de dynamique résultants respectivement (MDYN0_EIN1, MDYN1_EIN1) du bloc de coordination précédent (20-23).

5. Procédé selon la revendication 4, **caractérisé en ce qu'**en outre, lorsqu'il s'agit dans un sous-système respectif (3-6, 8) d'un moment de souhait (M_i) augmentant le moment ou réduisant le moment, les bits de dynamique résultants (MDYN0_EIN1, MDYN1_EIN1) du sous-système précédent (3-6, 8), au cas où le moment de souhait résultant (M_EIN1) du sous-système précédent (3-6, 8) est supérieur au moment de souhait (M_EIN2) du sous-système actuel (3-6, 8), ou les bits de dynamique (MDYNO_EIN2, MDYN1_EIN2) du sous-système actuel (3-6, 8), au cas où le moment de souhait résultant (M_EIN1) du sous-système précédent (3-6, 8) est inférieur au moment de souhait (M_EIN2) du sous-système actuel (3-6, 8), sont transmis en tant que nouveaux bits de dynamique (MDYN0_AUS, MDYN1_AUS) au sous-système suivant (3-6, 8) ou au dispositif en vue d'ajuster les moments (2b).
